# EUROPEAN PATENT SPECIFICATION

(11) **EP 4 378 976 B1**
(45) Date of publication and mention of the grant of the patent: **21.10.2026**
(21) Application number: 23820026.5
(22) Date of filing: 26.05.2023
(51) Int. Cl.: C08G 63/91, C08K 5/1515, C08K 5/09, C08L 67/04, C08G 63/08, C08K 5/50

(54) **HIGHLY BRANCHED POLYLACTIDE RESIN, AND METHOD FOR PREPARING SAME**
HOCHVERZWEIGTES POLYLACTIDHARZ UND VERFAHREN ZUR HERSTELLUNG DAVON
RÉSINE DE POLYLACTIDE HAUTEMENT RAMIFIÉE ET SON PROCÉDÉ DE PRÉPARATION

(30) Priority: 07.06.2022 KR 20220069135; 24.05.2023 KR 20230066674
(43) Date of publication of application: 05.06.2024
(73) Proprietor: LG Chem, Ltd., Yeongdeungpo-gu Seoul 07336 (KR)
(72) Inventor: WOO, Won Hee, Daejeon 34122 (KR); PARK, Si Jung, Daejeon 34122 (KR); CHOI, Heung Yeal, Daejeon 34122 (KR); OH, Wan Kyu, Daejeon 34122 (KR)
(74) Representative: Goddar, Heinz J.
(86) International application number: PCT/KR2023/007268
(87) International publication number: WO 2023/239090

(56) References cited:
- CN-A- 103 788 601
- CN-A- 113 956 486
- KR-A- 19980 703 538
- COIAI SERENA, DI LORENZO MARIA LAURA, CINELLI PATRIZIA, RIGHETTI MARIA CRISTINA, PASSAGLIA ELISA: "Binary Green Blends of Poly(lactic acid) with Poly(butylene adipate-co-butylene terephthalate) and Poly(butylene succinate-co-butylene adipate) and Their Nanocomposites", POLYMERS, MOLECULAR DIVERSITY PRESERVATION INTERNATIONAL (M DP I) AG., CH, vol. 13, no. 15, 28 July 2021 (2021-07-28), CH , pages 2489, XP093114519, ISSN: 2073-4360, DOI: 10.3390/polym13152489
- FARIAS DA SILVA JULIANA M.; SOARES BLUMA G.: "Epoxidized cardanol-based prepolymer as promising biobased compatibilizing agent for PLA/PBAT blends", POLYMER TESTING, ELSEVIER, AMSTERDAM, NL, vol. 93, 17 October 2020 (2020-10-17), AMSTERDAM, NL , XP086416131, ISSN: 0142-9418, DOI: 10.1016/j.polymertesting.2020.106889

## Description

### [TECHNICAL FIELD]

The present disclosure relates to a polylactide resin composition, and a highly branched polylactide resin prepared therefrom, and a method for preparing the same.

### [BACKGROUND ART]

Conventional petroleum-based plastic materials do not naturally decompose, which causes serious environmental pollution. Thus, finding a material to replace them is the top priority research issue in recent years. In particular, plastic foam is widely used as a cushioning material for packaging, but in the case of EPS (Expanded polystyrene) which is most frequently used in the art, it not only does not decompose, but also causes environmental pollution such as generating toxic gases during combustion.

Polylactide (or polylactic acid; PLA) resin, which is a promising alternative to petroleum-based plastic materials, is prepared based on biomass materials, and is an eco-friendly material which emits less global warming gas carbon dioxide during the production process, and is degraded by a specific temperature and composting facility. In addition, the polylactide resin has advantages that it is inexpensive compared to other biodegradable polymers and has high tensile strength and modulus properties.

However, the polylactide resin has disadvantages that it has low thermal stability and impact resistance, slow crystallization rate, and especially low melt strength, making it difficult to use for foam applications. Thus, various methods are known to improve the melt strength of polylactide resin. As an example, a method of increasing LCB (long chain branch) of the polylactide resin to perform branching is known.

Although various branching agents that can be applied to polylactide resins have been known in the past, they have limitations in highly branching polylactide resins. Therefore, the present inventors have found that by using a specific branching agent and anhydride-based compound in the polylactide resin as will be described later, a high degree of branching of the polylactide resin, which has not been achieved hitherto, is achieved, and completed the present disclosure.

### [DETAILED DESCRIPTION OF THE INVENTION]

### [Technical Problem]

It is an object of the present disclosure to provide a polylactide resin composition for preparing a highly branched polylactide resin.

It is another object of the present disclosure to provide a highly branched polylactide resin prepared from the polylactide resin composition, and a method for preparing the same

### [Technical Solution]

In order to achieve the above object, according to one aspect of the present disclosure, there is provided the following polylactide resin composition:
A polylactide resin composition comprising:
100 parts by weight of a polylactide resin,
0.05 to 1.0 parts by weight of an organic acid anhydride;
0.05 to 1.0 parts by weight of a phosphorus-based compound, and
0.1 to 5.0 parts by weight of a branching agent represented by the following Chemical Formula 1:

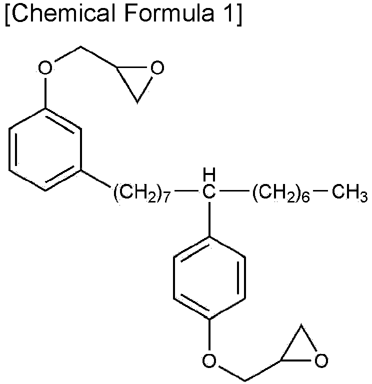

As used herein, the term "polylactide resin" is defined as comprehensively referring to a homopolymer or copolymer including a repeating unit represented by the following Chemical Formula.

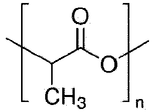

The polylactide resin can be prepared by a process including a step of forming the above repeating unit by the ring opening polymerization of the lactide monomer. The polymer obtained after the completion of such ring opening polymerization and the formation of the repeating unit can be referred to as the "polylactide resin".

At this time, the term "lactide monomer" can be defined as follows. Typically, lactides can be classified into L-lactide consisting of L-lactic acid, D-lactide consisting of D-lactic acid, and meso-lactide consisting of an L-type and a D-type. Also, a mixture of L-lactide and D-lactide in a ratio of 50:50 is referred to as D,L-lactide or rac-lactide. Among these lactides, the polymerization proceeding only with either of L-lactide and D-lactide that have a high optical purity is known to yield an L- or D-polylactide (PLLA or PDLA) with a high stereoregularity. Such polylactides have a faster crystallization rate and also a higher crystallinity degree than a polylactide having a low optical purity. However, the term "lactide monomer" as used herein is defined to include all types of lactides regardless of the characteristic differences of lactides depending on their shapes and the characteristic differences of the polylactide resins obtained therefrom.

Meanwhile, the polylactide resin according to the present disclosure has a weight average molecular weight of 70,000 to 400,000 as an example.

As used herein, the term "organic acid anhydride" refers to a type of chemical compound derived by the removal of water molecules from an organic acid, and particularly, in the present disclosure, the organic acid anhydride reacts with the terminal hydroxy group (-OH) of the polylactide resin, which serve to make the terminal of the polylactide resin have a carboxyl group (-COOH). This further facilitates the reaction between the terminal carboxy group of the polylactide resin and the epoxy group present in the branching agent, which leads to a high degree of branching of the polylactide resin.

From this point of view, the organic acid anhydride is not particularly limited as long as it is a substance that reacts with the terminal hydroxy group (-OH) of the polylactide resin and makes the terminal of the polylactide resin have a carboxyl group (-COOH). Examples thereof include succinic anhydride, maleic anhydride, phthalic anhydride, or pyromellitic dianhydride.

Preferably, the organic acid anhydride is contained in an amount of 0.06 parts by weight or more, 0.07 parts by weight or more, 0.08 parts by weight or more, 0.09 parts by weight or more, or 0.10 parts by weight or more; and 0.9 parts by weight or less, 0.8 parts by weight or less, 0.7 parts by weight or less, 0.6 parts by weight or less, 0.5 parts by weight or less, 0.4 parts by weight or less, 0.3 parts by weight or less, or 0.2 parts by weight or less, based on 100 parts by weight of the polylactide resin.

The branching agent of Chemical Formula 1 has a plurality of epoxy groups, and reacts with the epoxy group and the polylactide resin having a terminal carboxy group (-COOH) to enable branching of the polylactide resin.

Preferably, the branching agent of Chemical Formula 1 is contained in an amount of 0.2 parts by weight or more, 0.3 parts by weight or more, 0.4 parts by weight or more, 0.5 parts by weight or more, 0.6 parts by weight or more, 0.7 parts by weight or more, 0.8 parts by weight or more, 0.9 parts by weight or more, or 1.0 parts by weight or more; and 4.5 parts by weight or less, or 4.0 parts by weight or less, based on 100 parts by weight of the polylactide resin.

The phosphorus-based compound acts as a nucleophile and induces ring opening of the epoxy group of the branching agent of Chemical Formula 1 to cause chain extension. When the phosphorus-based compound is not added, the reaction between the polylactide resin and the branching agent of Chemical Formula 1 does not occur under general mixing conditions.

Preferably, the phosphorus-based compound is a compound represented by the following Chemical Formula 2: 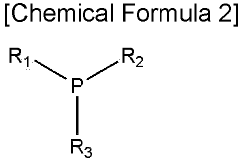 in Chemical Formula 2,
R₁, R₂ and R₃ are each independently a C₁₋₂₀ alkyl; a C₃₋₂₀ cycloalkyl; phenyl unsubstituted or substituted with at least one C₁₋₂₀ alkyl, or C₁₋₂₀ alkoxy; or benzyl.

Preferably, the phosphorus-based compound is triphenylphosphine, tri-m-tolylphosphine, diphenyl(para-tolyl)phosphine, tris(2,6-dimethoxyphenyl)phosphine, tris(4-methoxyphenyl)phosphine, trimesitylphosphine, tris-3,5-xylylphosphine, tricyclohexylphosphine, tribenzylphosphine, benzyldiphenylphosphine, or diphenylnormal-propylphosphine, more preferably, triphenylphosphine.

Preferably, the phosphorus-based compound is contained in an amount of 0.06 parts by weight or more, 0.07 parts by weight or more, 0.08 parts by weight or more, 0.09 parts by weight or more, or 0.10 parts by weight or more; and 0.9 parts by weight or less, 0.8 parts by weight or less, 0.7 parts by weight or less, 0.6 parts by weight or less, 0.5 parts by weight or less, 0.4 parts by weight or less, 0.3 parts by weight or less, or 0.2 parts by weight or less, based on 100 parts by weight of the polylactide resin.

According to another aspect of the present disclosure, there is provided a branched polylactide resin, which is prepared by heat-treating the above-mentioned polylactide resin composition.

As described above, the branching agent contained in in the polylactide resin composition reacts with the polylactide resin having a carboxyl group (-COOH) terminal to enable branching of the polylactide resin, and a predetermined heat treatment progresses for the above reaction. A specific method for preparing the branched polylactide resin will be described later.

Branching of the polylactide resin progresses as described above, so that the molecular weight of the branched polylactide resin is higher than that of the polylactide resin contained in the polylactide resin composition. Preferably, the branched polylactide resin has a weight average molecular weight of 70,000 to 400,000. More preferably, the weight average molecular weight of the branched polylactide resin is 80,000 or more, 90,000 or more, 100,000 or more, 110,000 or more, 120,000 or more, or 130,000 or more; and 350,000 or less, 300,000 or less, 250,000 or less, 240,000 or less, 230,000 or less, 220,000 or less, 210,000 or less, or 200,000 or less.

Moreover, branching progresses as described above, so that the molecular weight distribution (Mw/Mn) of the branched polylactide resin is preferably 1.0 to 3.0.

Preferably, the branched polylactide resin has a Z-average molecular weight of 150,000 to 400,000. More preferably, the weight average molecular weight of the branched polylactide resin is 160,000 or more, 170,000 or more, 180,000 or more, 190,000 or more, or 200,000 or more; and 350,000 or less, 340,000 or less, 330,000 or less, 320,000 or less, 310,000 or less, 300,000 or less, 290,000 or less, or 280,000 or less.

According to yet another aspect of the present disclosure, there is provided a method for preparing the branched polylactide resin described above, comprising the steps of:
1) mixing a polylactide resin and an organic acid anhydride at 170°C to 200°C (step 1); and
2) mixing the product of step 1 with the branching agent of Chemical Formula 1 and the phosphorus-based compound (step 2).

Step 1 is a step of reacting the terminal hydroxy group (-OH) of the polylactide resin with an organic acid anhydride to make the terminal of the polylactide resin have a carboxy group (-COOH), which is a step performed prior to the reaction of the polylactide resin and the branching agent.

Step 2 is a step of reacting the polylactide resin that has a carboxy group (-COOH) at the terminal due to step 1, with the epoxy group of the branching agent of Chemical Formula 1, wherein the phosphorus compound is added together for ring opening of the epoxy group, to prepare the branched polylactide resin according to the present disclosure.

Further embodiments are disclosed in the dependent claims.

### [Advantageous Effects]

The above-mentioned branched polylactide resin according to the present disclosure has a feature that it is highly branched and thus is improved in several physical properties, especially melt strength as compared to conventional polylactide resins, and can be applied to processes that were difficult to apply to conventional polylactide resins such as expanded foam.

### [DETAILED DESCRIPTION OF THE EMBODIMENTS]

Below, embodiments of the present disclosure will be described in more detail with reference to examples.

### Example 1

65 g of PLA (4032D from NatureWorks; weight average molecular weight of about 210,000), and 0.2 wt% of succinic anhydride based on the weight of the PLA was placed in a HAAKE mixer, and mixed at 60 rpm at 190°C for 2 minutes. After stopping for a while, 3 wt% of the branching agent shown in Table 1 below and 0.2 wt% of TPP based on the weight of the PLA were added thereto, and mixed for 10 minutes to prepare a branched polylactide resin.

### Examples 2 to 12

Branched polylactide resins were respectively prepared in the same manner as in Example 1, except that the amounts of anhydride compound, TPP (triphenylphosphine) and branching agent were changed as shown in Table 1 below.

### Comparative Examples 1 to 4

Polylactide resins of Comparative Examples 1 to 3 were respectively prepared in the same manner as in Example 1, except that any one or more of an anhydride compound, TPP (triphenylphosphine) and a branching agent were not used as shown in Table 1 below. In addition, PLA (4032D from NatureWorks) used in Examples was used as Comparative Example 4 as it was.

### Experimental Example

The degree of branching of the resins prepared in Examples and Comparative Examples were measured using MALS-GPC. Mw, Mz, PDI, and Mark-Houwink slopes were measured by MALS-GPC, and specific measurement conditions are as follows.
Column: PLgel mixed-B x 2
Solvent: Tetrahydrofuran (Stabilized with BHT)
Flow rate: 1.0 ml/min
Sample concentration: 3.0 mg PLA / 1.0 mL THF
Injection volume: 100 µl
Column temperature: 40 °C
Detector: Viscotek TDA 305
Data Processing: OmniSEC

The higher the values of Mw, Mz, and PDI, and the lower the values of the Mark-Houwink slope, show better branching, and the results are shown in Table 1 below.

**[Table 1]**

| | Anhydride | | Branching agent | | TPP | Mw | Mz | PDI | Mark-Houwin k slope |
|---|---|---|---|---|---|---|---|---|---|
| | Type | Conte nt (wt%) | Type | Conten t (wt%) | Conte nt (wt%) | | | | |
| Example 1 | SA¹⁾ | 0.2 | NC-514²⁾ | 3.0 | 0.2 | 168.9k | 285.2k | 1.59 | 0.52 |
| Example 2 | SA | 0.2 | NC-514 | 4.0 | 0.2 | 159.0k | 257.1k | 1.36 | 0.57 |
| Example 3 | SA | 0.2 | NC-514 | 1.5 | 0.2 | 139.5k | 202.5k | 1.31 | 0.64 |
| Example 4 | SA | 0.2 | NC-514 | 0.5 | 0.2 | 132.3k | 177.3k | 1.33 | 0.68 |
| Example 5 | SA | 0.1 | NC-514 | 3.0 | 0.2 | 149.2k | 234.5k | 1.34 | 0.61 |
| Example 6 | SA | 0.1 | NC-514 | 4.0 | 0.2 | 145.1k | 210.6k | 1.31 | 0.64 |
| Example 7 | SA | 0.1 | NC-514 | 1.5 | 0.2 | 133.4k | 183.9k | 1.24 | 0.69 |
| Example 8 | SA | 0.1 | NC-514 | 0.5 | 0.2 | 132.3k | 173.7k | 1.22 | 0.70 |
| Example 9 | SA | 0.2 | NC-514 | 3.0 | 0.1 | 158.3k | 255.3k | 1.37 | 0.55 |
| Example 10 | SA | 0.2 | NC-514 | 4.0 | 0.1 | 148.5k | 238.5k | 1.33 | 0.59 |
| Example 11 | SA | 0.2 | NC-514 | 1.5 | 0.1 | 137.8k | 193.7k | 1.28 | 0.66 |
| Example 12 | SA | 0.2 | NC-514 | 0.5 | 0.1 | 134.1k | 185.7k | 1.27 | 0.68 |
| Comparative Example 1 | SA | 0.2 | NC-514 | 3.0 | - | 155.4k | 219.9k | 1.28 | 0.61 |
| Comparative Example 2 | - | - | NC-514 | 3.0 | 0.2 | 139.2k | 173.6k | 1.20 | 0.67 |
| Comparative Example 3 | - | - | NC-514 | 3.0 | - | 143.4k | 178.9k | 1.20 | 0.71 |
| Comparative Example 4 | - | - | - | - | - | 125.2k | 162.3k | 1.27 | 0.71 |
| 1) SA: Succinic anhydride | | | | | | | | | |
| 2) NC-514: NC-514 which is Cardolite's commercial product | | | | | | | | | |

## Claims

1. A polylactide resin composition comprising:
100 parts by weight of a polylactide resin,
0.05 to 1.0 parts by weight of an organic acid anhydride;
0.05 to 1.0 parts by weight of a phosphorus-based compound, and
0.1 to 5.0 parts by weight of a branching agent represented by the following Chemical Formula 1:

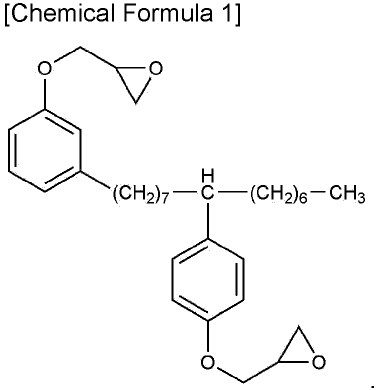

2. The polylactide resin composition of claim 1, wherein:
the organic acid anhydride is succinic anhydride, maleic anhydride, phthalic anhydride, or pyromellitic dianhydride.

3. The polylactide resin composition of claim 1, wherein:
the organic acid anhydride is contained in an amount of 0.1 to 0.2 parts by weight.

4. The polylactide resin composition of claim 1, wherein:
the phosphorus-based compound is a compound represented by the following Chemical Formula 2: 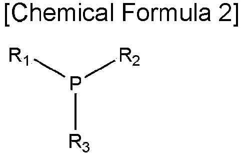 in Chemical Formula 2,
R₁, R₂ and R₃ are each independently a C₁₋₂₀ alkyl; a C₃₋₂₀ cycloalkyl; phenyl unsubstituted or substituted with at least one C₁₋₂₀ alkyl, or C₁₋₂₀ alkoxy; or benzyl.

5. The polylactide resin composition of claim 1, wherein:
the phosphorus-based compound is triphenylphosphine.

6. The polylactide resin composition of claim 1, wherein:
the branching agent of Chemical Formula 1 is contained in an amount of 2.0 to 4.0 parts by weight.

7. The polylactide resin composition of claim 1, wherein:
the polylactide resin has a weight average molecular weight of 70,000 to 400,000, wherein the weight average molecular weight is measured by MALS-GPC as disclosed in the specification.

8. A branched polylactide resin, which is prepared by heat-treating the polylactide resin composition of any one of claims 1 to 7.

9. The branched polylactide resin of claim 8, wherein:
the branched polylactide resin has a weight average molecular weight of 100,000 to 200,000, wherein the weight average molecular weight is measured by MALS-GPC as disclosed in the specification.

10. The branched polylactide resin of claim 8, wherein:
the branched polylactide resin has a Z-average molecular weight of 150,000 to 400,000, wherein the Z-average molecular weight is measured by MALS-GPC as disclosed in the specification.

11. The branched polylactide resin of claim 8, wherein:
the branched polylactide resin has a molecular weight distribution (Mw/Mn) of 1.0 to 3.0, wherein the molecular weight distribution is measured by MALS-GPC as disclosed in the specification.

12. A method for preparing the branched polylactide resin of claim 8, the method comprising the steps of:
1) mixing a polylactide resin and an organic acid anhydride at 170°C to 200°C (step 1); and
2) mixing the product of step 1 with the branching agent of Chemical Formula 1 and the phosphorus-based compound (step 2).

13. The method of claim 12, wherein:
the mixing time of step 1 is 30 seconds to 3 minutes.

14. The method of claim 12, wherein:
the mixing time of step 2 is 3 to 15 minutes.

## Patentansprüche

1. Polylactidharzzusammensetzung, umfassend:
100 Gewichtsteile eines Polylactidharzes,
0,05 bis 1,0 Gewichtsteile eines organischen Säureanhydrids;
0,05 bis 1,0 Gewichtsteile einer Verbindung auf Phosphorbasis und
0,1 bis 5,0 Gewichtsteile eines Verzweigungsmittels, dargestellt durch die folgende chemische Formel 1:

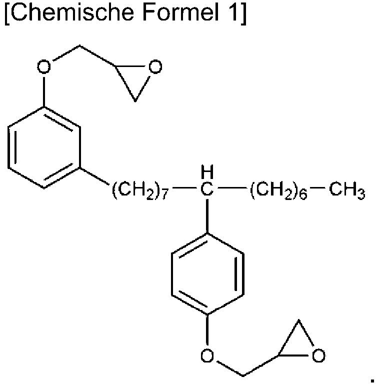

2. Polylactidharzzusammensetzung nach Anspruch 1, wobei:
das organische Säureanhydrid Bernsteinsäureanhydrid, Maleinsäureanhydrid, Phthalsäureanhydrid oder Pyromellithsäuredianhydrid ist.

3. Polylactidharzzusammensetzung nach Anspruch 1, wobei:
das organische Säureanhydrid in einer Menge von 0,1 bis 0,2 Gewichtsteilen enthalten ist.

4. Polylactidharzzusammensetzung nach Anspruch 1, wobei:
die Verbindung auf Phosphorbasis eine Verbindung ist, dargestellt durch die folgende chemische Formel 2: 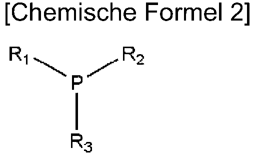 wobei in der chemischen Formel 2
R₁, R₂ und R₃ jeweils unabhängig ein C₁₋₂₀ -Alkyl; ein C₃₋₂₀ -Cycloalkyl; Phenyl, unsubstituiert oder substituiert mit mindestens einem C₁₋₂₀ -Alkyl, oder C₁₋₂₀ - Alkoxy; oder Benzyl sind.

5. Polylactidharzzusammensetzung nach Anspruch 1, wobei:
die Verbindung auf Phosphorbasis Triphenylphosphin ist.

6. Polylactidharzzusammensetzung nach Anspruch 1, wobei:
das Verzweigungsmittel der chemischen Formel 1 in einer Menge von 2,0 bis 4,0 Gewichtsteilen enthalten ist.

7. Polylactidharzzusammensetzung nach Anspruch 1, wobei:
das Polylactidharz ein gewichtsmittleres Molekulargewicht von 70.000 bis 400.000 aufweist, wobei das gewichtsmittlere Molekulargewicht durch MALS-GPC gemessen wird, wie in der Beschreibung offenbart.

8. Verzweigtes Polylactidharz, das durch Wärmebehandeln der Polylactidharzzusammensetzung nach einem der Ansprüche 1 bis 7 hergestellt wird.

9. Verzweigtes Polylactidharz nach Anspruch 8, wobei:
das verzweigte Polylactidharz ein gewichtsmittleres Molekulargewicht von 100.000 bis 200.000 aufweist, wobei das gewichtsmittlere Molekulargewicht durch MALS-GPC gemessen wird, wie in der Beschreibung offenbart.

10. Verzweigtes Polylactidharz nach Anspruch 8, wobei:
das verzweigte Polylactidharz ein Z-mittleres Molekulargewicht von 150.000 bis 400.000 aufweist, wobei das Z-mittlere Molekulargewicht durch MALS-GPC gemessen wird, wie in der Beschreibung offenbart.

11. Verzweigtes Polylactidharz nach Anspruch 8, wobei:
das verzweigte Polylactidharz eine Molekulargewichtsverteilung (Mw/Mn) von 1,0 bis 3,0 aufweist, wobei die Molekulargewichtsverteilung durch MALS-GPC gemessen wird, wie in der Beschreibung offenbart.

12. Verfahren zum Herstellen des verzweigten Polylactidharzes nach Anspruch 8, wobei das Verfahren die folgenden Schritte umfasst:
1) Mischen eines Polylactidharzes und eines organischen Säureanhydrids bei 170 °C bis 200 °C (Schritt 1); und
2) Mischen des Produkts von Schritt 1 mit dem Verzweigungsmittel der chemischen Formel 1 und der Verbindung auf Phosphorbasis (Schritt 2).

13. Verfahren nach Anspruch 12, wobei:
die Mischzeit von Schritt 1 30 Sekunden bis 3 Minuten beträgt.

14. Verfahren nach Anspruch 12, wobei:
die Mischzeit von Schritt 2 3 bis 15 Minuten beträgt.

## Revendications

1. Composition de résine polylactide comprenant :
100 parties en poids d'une résine polylactide,
0,05 à 1,0 partie en poids d'un anhydride d'acide organique ;
0,05 à 1,0 partie en poids d'un composé à base de phosphore, et
0,1 à 5,0 parties en poids d'un agent de ramification représenté par la Formule chimique 1 ci-après :

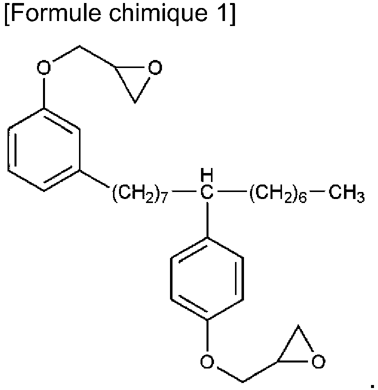

2. Composition de résine polylactide selon la revendication 1, dans laquelle :
l'anhydride d'acide organique est un anhydride succinique, un anhydride maléique, un anhydride phtalique ou un dianhydride pyroméllitique.

3. Composition de résine polylactide selon la revendication 1, dans laquelle :
l'anhydride d'acide organique est contenu dans une quantité de 0,1 à 0,2 partie en poids.

4. Composition de résine polylactide selon la revendication 1, dans laquelle :
le composé à base de phosphore est un composé représenté par la Formule chimique 2 ci-après : 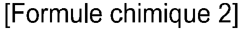 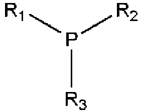 dans la Formule chimique 2,
R₁, R₂ et R₃ sont chacun indépendamment un alkyle en C₁₋₂₀ ; un cycloalkyle en C₃₋₂₀ ; un phényle non substitué ou substitué par soit un alkyle en C₁₋₂₀, soit un alkoxy en C₁₋₂₀ ; soit un benzyle.

5. Composition de résine polylactide selon la revendication 1, dans laquelle :
le composé à base de phosphore est un triphénylphosphine.

6. Composition de résine polylactide selon la revendication 1, dans laquelle :
l'agent de ramification de la Formule chimique 1 est contenu dans une quantité de 2,0 à 4,0 parties en poids.

7. Composition de résine polylactide selon la revendication 1, dans laquelle :
la résine polylactide a un poids moléculaire moyen en poids de 70 000 à 400 000, dans laquelle le poids moléculaire moyen en poids est mesuré par MALS-GPC comme décrit dans la spécification.

8. Résine polylactide ramifiée, laquelle est préparée par traitement thermique de la composition de résine polylactide selon l'une quelconque des revendications 1 à 7.

9. Résine polylactide ramifiée selon la revendication 8, dans laquelle :
la résine polylactide ramifiée a un poids moléculaire moyen en poids de 100 000 à 200 000, dans laquelle le poids moléculaire moyen en poids est mesuré by MALS-GPC comme décrit dans la spécification.

10. Résine polylactide ramifiée selon la revendication 8, dans laquelle :
la résine polylactide ramifiée a un poids moléculaire moyen Z de 150 000 à 400 000, dans laquelle le poids moléculaire moyen Z est mesuré par MALS-GPC comme décrit dans la spécification.

11. Résine polylactide ramifiée selon la revendication 8, dans laquelle :
la résine polylactide ramifiée a une distribution de poids moléculaire (Mw/Mn) de 1,0 à 3.0, dans laquelle la distribution de poids moléculaire est mesurée par MALS-GPC comme décrit dans la spécification.

12. Procédé de préparation de la résine polylactide ramifiée selon la revendication 8, le procédé comprenant les étapes consistant à :
1) mélanger une résine polylactide et un anhydride d'acide organique à 170°C à 200°C (étape 1) ; et
2) mélanger le produit de l'étape 1 avec l'agent de ramification de la Formule chimique 1 et le composé à base de phosphore (étape 2).

13. Procédé selon la revendication 12, dans lequel :
le temps de mélangeage de l'étape 1 est 30 secondes à 3 minutes.

14. Procédé selon la revendication 12, dans lequel :
le temps de mélangeage de l'étape 2 est 3 à 15 minutes.
